# EUROPEAN PATENT APPLICATION

(11) **EP 4 082 405 A1**
(43) Date of publication of application: **02.11.2022**
(21) Application number: 22173707.5
(22) Date of filing: 10.01.2020
(51) Int. Cl.: A47J 27/04, A47J 37/06, F24C 15/32

(54) **STEAM COOKING APPARATUS**

(30) Priority: 14.01.2019 EP 19151546
(62) Divisional of application: 20700377.3
(71) Applicant: Koninklijke Philips N.V., 5656 AG Eindhoven (NL)
(72) Inventor: VAUPOT, Jan, 5656 AE Eindhoven (NL); KRALL, Florian, 5656 AE Eindhoven (NL)
(74) Representative: de Vries, Janna

(57) **Abstract**

A cooking apparatus is for cooking using steam. A circulation system comprising an extraction vent in a rear wall of the cooking chamber. A delivery vent arrangement for delivering air to the food chamber has a vent at a top region of a rear wall area, and optionally also vents at side wall areas. The rear wall delivery vent may have a set of flow guiding fins. In combination, these features ensure a flow of how air/steam over the entire surface of the underside of the lid.

## Description

### FIELD OF THE INVENTION

This invention relates to a steam cooker, also referred to as a steamer.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking operates at a lower temperature, typically below 100 degrees Celsius, but nevertheless enables short cooking times due to the wet steam environment. The presence of water as the cooking medium causes a leaching out of water soluble nutrients when boiling, and this is greatly reduced by steam cooking.

However, steam cooking has some disadvantages, such as steamed up viewing windows making it difficult to inspect the cooking process.

There is a need for a steam cooker which addresses this issue.

### SUMMARY OF THE INVENTION

The invention is defined by the claims.

According to examples in accordance with an aspect of the invention, there is provided a steam cooking apparatus, comprising:
a food chamber comprising a base, a rear wall area, first and second opposing side wall areas and a front wall area;
a transparent lid;
a heating arrangement;
a water reservoir;
a circulation system comprising an extraction vent in the rear wall area through which air is drawn from inside the food chamber, and a delivery vent arrangement for delivering air to the food chamber,
wherein the delivery vent arrangement comprises:
   a first delivery vent at a top region of the rear wall area above the extraction vent and extending across at least half of the width of the rear wall area and/or at least half a width of the transparent lid.

By providing a delivery vent at the top of the rear wall, above the extraction vent, a circulatory flow is generated which passes under the lid. In this way, the lid is heated with a continuous flow, thereby reducing condensation on the lid to prevent steaming up of the viewing window formed by the transparent lid.

The first delivery vent is for example in series with a set of flow guiding fins.

The apparatus may comprise a second delivery vent at a top region of the first side wall area and a third delivery vent at a top region of the second side wall area.

The first delivery vent enables a flow of the delivered air (which includes, or is saturated with, steam) to pass over the full area of the underside of the lid.

The design of the flow guiding fins, in combination with the design of the second and third vents, assists in ensuring a flow remains at the top of the food chamber until it reaches the rear wall area, thereby flowing over the full area of the lid.

The first delivery vent may extend up to the full width of the rear wall area. Preferably, the first delivery vent extends across the at least half of the width of the transparent lid (or equivalently the transparent portion of a lid having a transparent portion).

The term "transparent lid" should thus be understood as meaning the whole lid if it is entirely transparent, or just the transparent portion if the lid has a transparent window and a significant non-transparent frame.

The flow guiding fins are preferably upright, so that they provide control of the lateral flow direction. For example, when there are first to third flow delivery vents, the flow guiding fins influence the way the flow from the first vent interacts with the flow from the second and third vents. In particular, the flow guiding fins provide a more uniform flow across the underside of the transparent lid, by redirecting the direction of the flow from the circulation system.

The transparent lid is for example inclined downwardly from the rear wall area towards the front wall area. The aim of the design is to prevent condensation of steam at the transparent section of the lid via heating. The incline means that the air flowing out of the vent or vents expands and drops down towards the intake section of the fan. The inclined lid follows this path for a longer distance than a horizontal lid. The resulting tapered cooking chamber (tapered along flow direction) maintains the flow speed near the surface of the lid at a higher level, supporting a more even heat distribution.

The first delivery vent for example comprises a slot extending widthwise across the rear wall area, and the flow guiding fins extend from top to bottom of the slot.

Thus, the flow guiding fins may be part of the slot in the rear wall area. However, they may instead be part of the underside of the lid or they may be mounted over (instead of inside) the slot.

The first delivery vent may for example comprise 1 to 10 flow guiding fins.

The first delivery vent may comprises a lower shelf on which the flow guiding fins are located. This lower shelf serves to direct flow such that it is flat or directed upwardly, thereby directed along or towards the underside of the lid.

The first delivery vent may also comprise comprises an upper shelf, wherein the flow guiding fins are sandwiched between the lower shelf and the upper shelf. The use of upper and lower shelves provides further control of the characteristics of the flow.

The second and third delivery vents may each also comprise a lower shelf. Again, this lower shelf directs the flow from these side vents across or towards the underside of the lid.

The lower shelves of the first, second and third delivery vents may form a continuous ridge.

A controller is preferably provided and is adapted to control the heating arrangement to heat water from the water reservoir to create steam. The circulation system preferably comprises a fan. The airflow is defined by the characteristics of the circulation system including a fan motor speed and fan dimensions.

The cooking apparatus preferably further comprises a water dosing system for delivering water to the heating arrangement. A continuous or pulsed delivery of water and a cyclic control of the heating arrangement may for example be used to maintain a cooking temperature in a desired range. A feed arrangement is for example provided to feed water from the water reservoir into contact with a heated surface of the first heater. This surface is then used to induce evaporation.

The transparent lid is preferably openable and is thus used both for inserting and removing food and for inspection during cooking.

As mentioned above, the delivery vent arrangement is preferably adapted to create a flow over the full area of an underside of the lid. However, in addition, the delivery vent arrangement may be adapted to prevent localized flow rotation within the food chamber.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a cooking apparatus;
Figure 2 shows the food chamber opened up to show the rear wall area and the first and second side wall areas;
Figure 3 shows a first example of a design of the first vent in more detail to show the flow guiding fins;
Figure 4 shows a second example of a design of the first vent;
Figure 5 shows one more detailed example of a design of the first vent;
Figure 6 shows that the second and third delivery vents may each also comprise a lower shelf;
Figure 7 shows a slightly different vent design;
Figure 8 shows how a sloped top may further assist in providing flow across the transparent lid; and
Figures 9A and 9B show the benefit of the flow guiding fins.
Figures 10 to 20 each show different designs with the food chamber opened up to show the rear wall area and the first and second side wall areas.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a cooking apparatus for cooking using steam. A circulation system comprises an extraction vent in a rear wall of the cooking chamber. A delivery vent arrangement for delivering air to the food chamber has a vent at least at a top region of a rear wall area. There may also be vents in side wall areas. The rear wall delivery vent may have a set of flow guiding fins. In combination, these features ensure a flow of how air/steam over the entire surface of the underside of the lid.

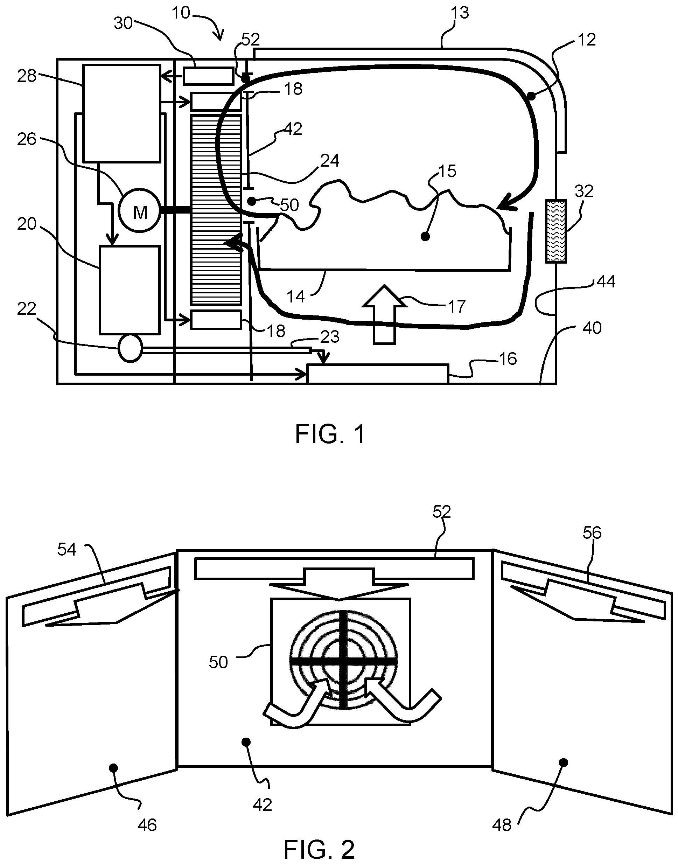

Figure 1 shows a a cooking apparatus 10, comprising a food chamber 12 in which a food basket 14 is mounted. The food chamber has a viewing window 13 which may also be the openable lid of the apparatus. Food 15 to be cooked is placed on the food basket which then places the food near the center of the food chamber. The food basket has air permeable side walls and optionally an air permeable base so that air and steam can circulate through the basket to the food.

There is a heating arrangement which in this example comprises a first heater 16 and a second heater 18. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a fan 24 and motor 26. The circulation system circulates the steam generated by the first heater 16 around the food chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The invention relates to a particular design of the circulation system, described below.

The apparatus is controlled by a controller 28, which controls the heating arrangement 16, 18 and optionally also the dosing system 22. The controller receives temperature information from a temperature sensor 30. The temperature of interest is the temperature at the center of the food chamber, where the food is located. However, the temperature sensor, which may be a negative temperature coefficient (NTC) temperature sensor, may be located anywhere in the food chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The applicant has also proposed (but not yet published) an approach in which the second heater further heats the steam for example to 120 degrees Celsius, or in the range 110 to 120 degrees Celsius. This approach may also be adopted.

The circulation system circulates the heated steam around the food chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100°C. Water is then added to the first water heater 16. This pre-heating improves the avoidance of condensation at the window of the transparent lid as discussed below.

The invention relates to the extraction of air and steam from the food chamber 12.

The food chamber 12 comprises a base 40, a rear wall area 42, first and second opposing side wall areas and a front wall area 44. These together define a closed chamber.

Figure 2 shows the food chamber opened up to show the rear wall area 42 and the first and second side wall areas 46, 48 for a first example of vent arrangement.

The circulation system draws air out of the food chamber through an extraction vent 50 in the rear wall area 42. This vent leads to the fan blades.

A delivery vent arrangement for delivering air (and steam) comprises a first delivery vent 52 at a top region of the rear wall area 42 above the extraction vent 50. It extends across at least half of the width of the rear wall area 42, preferably across more than 60%, 70% or 80% of that width. It preferably also extends across at least half of the width of the transparent lid. It may extend across a width corresponding to (or slightly larger than) a full width of the transparent lid (i.e. the transparent portion of the lid over across which a flow is to be created) but there will be some expansion of the width of the air flow from the first delivery vent, so the first delivery vent may not need to extend across the full lid width to achieve flow across the full underside of the lid.

In this example, a second delivery vent 54 is at a top region of the first side wall area 46 and a third delivery vent 56 is at a top region of the second side wall area 48.

These vents are the only entry points for air/steam driven by the circulation system. Thus, it is possible through design of the vents and fan to control the circulation of air and steam within the food chamber in a reliable and repeatable way.

The second and third delivery vents for example extend across at least 30% the width of the respective side wall area, preferably across more than 40%, 50% or 60% of that width. By way of example, the second and third vents extend across about 50% of the width.

The vents may be at the very top of the respective rear or side wall areas or they may be spaced from the top, for example by up to 15% of the height of the the food chamber.

Note that the term side wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

This arrangement of vents enables a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

In some examples, the first delivery vent comprises a set of flow guiding fins, not shown in Figure 2.

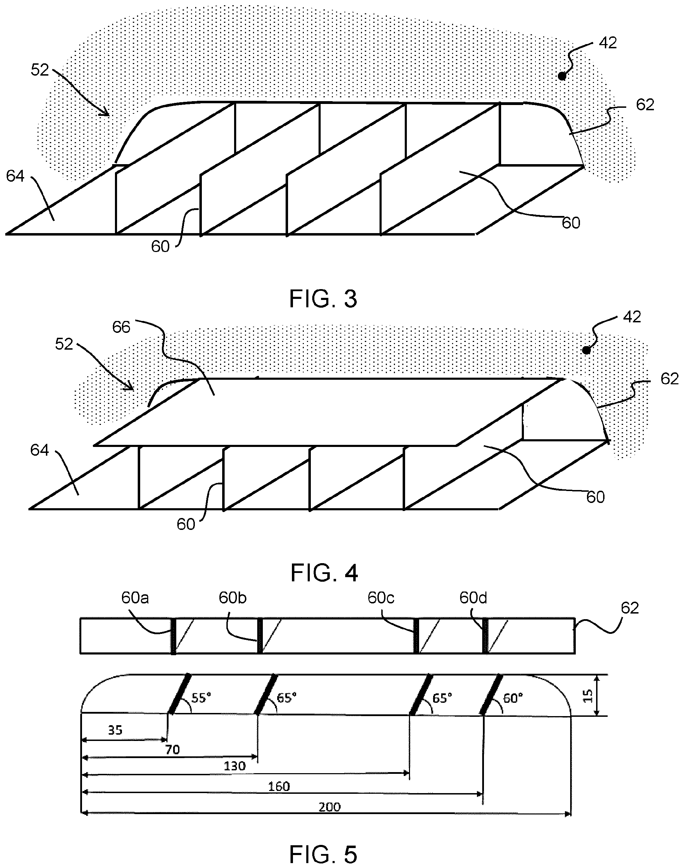

Figure 3 shows an example of a design of the first vent 52 in more detail to show the flow guiding fins 60.

The flow guiding 60 fins are upright, so that they provide control of the lateral flow direction. In this way, they influence the way the flow from the first vent 52 interacts with the flow from the second and third vents 54, 56. In this example, the first delivery vent comprises a slot 62 extending widthwise across the rear wall area 42, and the flow guiding fins extend from top to bottom of the slot. They may be in front of the slot (as shown, so only extend across the slot at their ends) or they may be recessed within the slot.

The purpose of the flow guiding fins is to improve the flow over the underside of the lid. In particular, the flow from the fan 24 will have different flow exit directions at different positions along the slot. The flow guiding fins are used to redirect the flows so that a more parallel set of flow streams is guided across the underside of the lid.

There may be 1 to 10 of the flow guiding fins 60.

The first delivery vent 52 has a lower shelf 64 on which the flow guiding fins 60 are located. This lower shelf 64 serves to direct flow such that it is flat or directed upwardly, thereby direct along or towards the underside of the lid 13.

The design of the flow guiding fins 60, in combination with the design of the second and third vents when used, ensures a flow remains at the top of the food chamber until it reaches the rear wall area, thereby flowing over the full area of the lid.

As shown in Figure 4, the first delivery vent 52 may also comprise an upper shelf 66, wherein the flow guiding fins 60 are sandwiched between the lower shelf 64 and the upper shelf 66. The use of upper and lower shelves provides further control of the characteristics of the flow. In particular, there is control of the lateral flow direction as well as the flow direction in the up-down direction.

Figure 5 shows one more detailed example of a design of the first vent 52.

It has four flow guiding fins 60a to 60d. The top image shows the slot 62 from in front. The fins 60 extend back behind the slot rather than projecting forward as in Figures 3 and 4. However, they still have a lower shelf and an upper shelf, but recessed behind the rear wall area 42.

The bottom image shows the design of the flow guiding fins from above. It shows that they are directed to provide a lateral flow redirection, based on the local flow conditions created by the fan. Different fins are at different angles to the normal. The aim is to create a set of flow streams which extend at 90 degrees to the rear wall. Thus, the flow guiding fins are adapted to straighten the flow directions from the directions created by the fan towards this normal direction. The flow guiding fins adapt the flow output from the fan so that regions of the underside of the lid which would, in the absence of the fins, not be exposed to a significant flow will be subject to a flow.

The example shows fins at 55, 60 and 65 degrees to the plane of the rear wall area 42, hence at 35, 30 and 25 degrees to the normal, for the purposes of straightening the flow.

The depth of the fins (in the normal direction) is shown to be 15mm. The height of the fins is also 15mm. The overall length of the slot is shown as 200mm and the fins are shown as distributed non-uniformly along the slot. Of course, they may be distributed uniformly instead. The slot length is chosen to be equal to or larger than the half of width of the transparent lid, specifically the width of the transparent part.

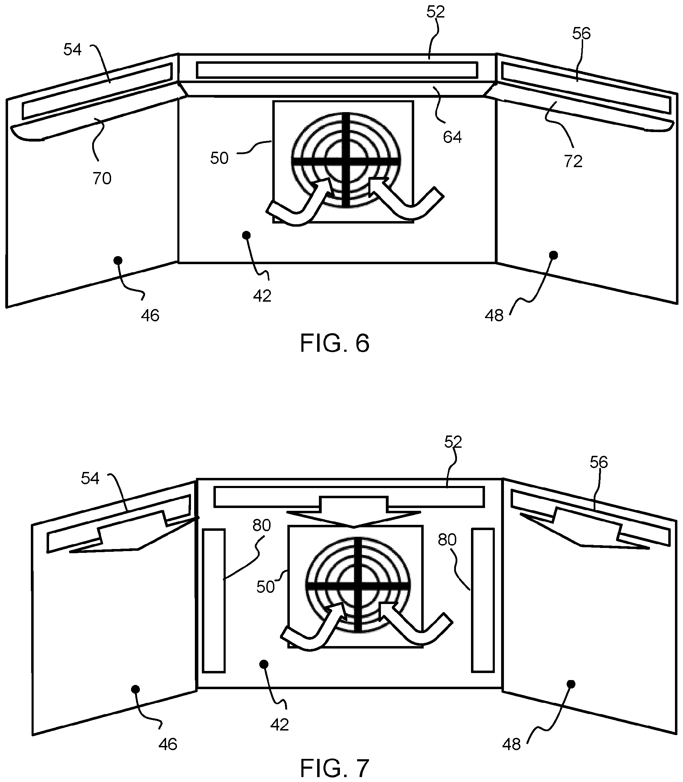

The second and third delivery vents may each also comprise a lower shelf as shown in Figure 6.

The second vent 54 has a second lower shelf 70 and the third vent 56 has a third lower shelf 72. Again, the lower shelves direct the flow from the side vents across or towards the underside of the lid.

The lower shelves of the first, second and third delivery vents may form a continuous ridge as is shown in Figure 6.

The second and third vents may also comprise guiding fins of the type explained above with reference to the first vent.

Figure 7 shows a slightly different vent design. The rear wall has the first delivery vent 52 across the top and it also has side vents 80 extending in the top-to-bottom direction. These are used to create a desired overall flow within the food chamber.

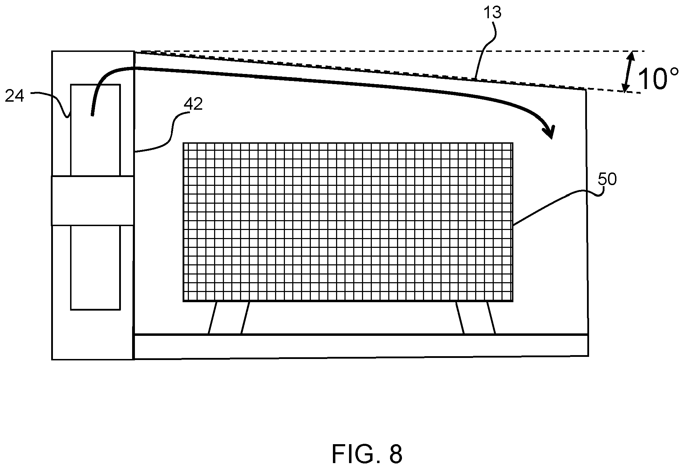

Figure 8 shows that the top of the cooking apparatus, and hence the top and the underside of the lid, are sloped downwardly away from the rear wall area 42. This may further assist in retaining flow across and against the full area of the underside of the transparent lid 13.

Thus, in combination, the flow guiding fins and the slope of the lid ensure air is guided over the whole surface. The slope is for example 10 degrees as shown in Figure 8, for example in the range 5 degrees to 20 degrees.

The aim of the overall design is to limit and preferably even prevent condensation of steam at the transparent section of the lid via heating. Specific heating parameters (humidity and temperature levels e.g. <120°C for specific cooking programs) are dictated by the cooking process, giving specific restrictions to the heating up of the lid surface. Some of these heating parameters will not allow complete prevention of condensation but the arrangement of the invention will at least provide an improvement.

The heat is distributed via an air flow, so an even distribution of the airflow is preferably provided across the inner surface of the transparent lid. The incline means that the air flowing out of the vent or vents expands and drops down towards the intake section of the fan. The inclined lid follows this path for a longer distance than a horizontal lid. The resulting tapered cooking chamber (tapered along the flow direction) maintains the flow speed near the surface of the lid at a higher level, supporting a more even heat distribution. The optimal shape of the lid could be curved, or a planar inclined glass plate may be used to give lower cost.

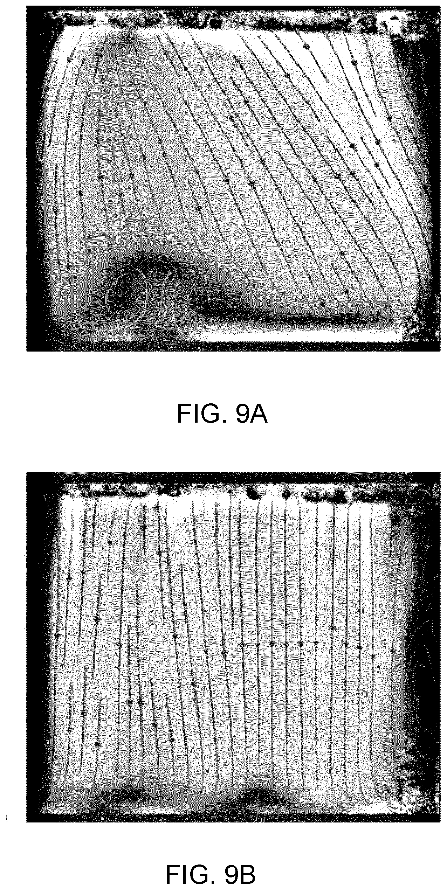

Figures 9A and 9B show the benefit of the flow redirection achieved using the flow guiding fins. They show a view from above of the flow conditions (the arrows) on the surface of the underside of the lid.

Figure 9A shows the flow with no flow guiding fins, and it shows regions where there is little or no flow and a hence non-uniform flow distribution. Figure 9B shows the improvement with the flow guiding fins, and shows a more laminar and uniform flow over the underside of the lid.

The example above makes use of two heaters, but there could be a single heater for generating steam and for heating the circulatory flow.

As mentioned above, another approach for avoiding condensation has been proposed (but not yet published) by the applicant, which involves cooking using steam heated above 100 degrees Celsius. This steam is relatively dry (even when close to the maximal humidity level that is possible at the elevated temperature).

The heated steam is circulated in manner shown above so that the steam in part performs a drying function. The result is shorter cooking times and also increased nutrient retention because the nutrients are not washed away by large amounts of water used in the cooking process. In particular, washing out of water-soluble vitamins is reduced.

This enables the surfaces of the cooking chamber to be maintained more easily above the dew point at the operating temperature, pressure and humidity level, so that no condensation at a surface of the cooking chamber (such as a viewing window) takes place.

A side effect of the circulation of saturated air at an elevated temperature (such as 120 degrees Celsius) compared to wet steam at around 100 degrees Celsius is that the heat transfer rate to food due to condensation and convection is increased. As a result, the time to cook the food is decreased compared to standard steam cooking and also increased nutrient retention because the nutrients are not washed away by large amounts of water used in the cooking process. In particular, washing out of water-soluble vitamins is reduced.

The delivery vent design described above may be combined with the use of overheated steam.

The examples above make use of a combination of three vents, as well as flow guiding fins.

However, as a minimum, there is only the first delivery vent 52 at a top region of the rear wall area 42 above the extraction vent 50 and extending across at least half of the width of the rear wall area 42 and/or at least half the width of the transparent lid.

Some further examples will be shown to illustrate how the different design features used in the examples above may be combined or omitted.

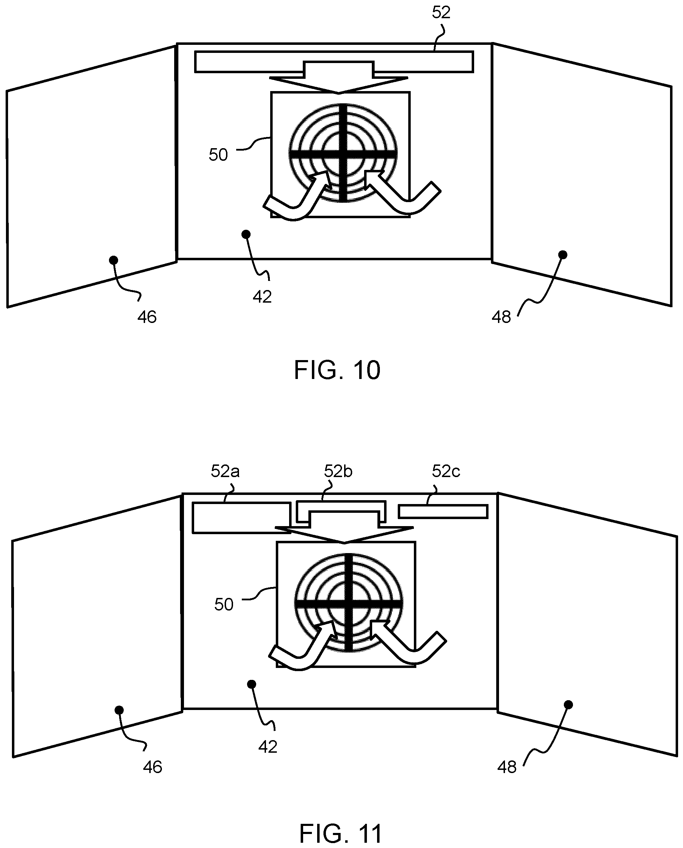

The same reference numbers are used in Figures 10 to 20 as in Figures 1 to 9 and the description of those components will not be repeated. Figures 10 to 20 each show the food chamber opened up to show the rear wall area and the first and second side wall areas.

Figure 10 shows an example with only the first delivery vent 52.

Figure 11 shows an example with only the first delivery vent, and in which it is also not a continuous slot, but is divided into a set of slots 52a, 52b, 52c. In the particular example of Figure 11, they have progressively decreasing slot height from one side of the rear wall area 42 to the other. This is just an example to show that the airflow conditions may be controlled additionally using different designs of opening, instead of or as well as the use of fins.

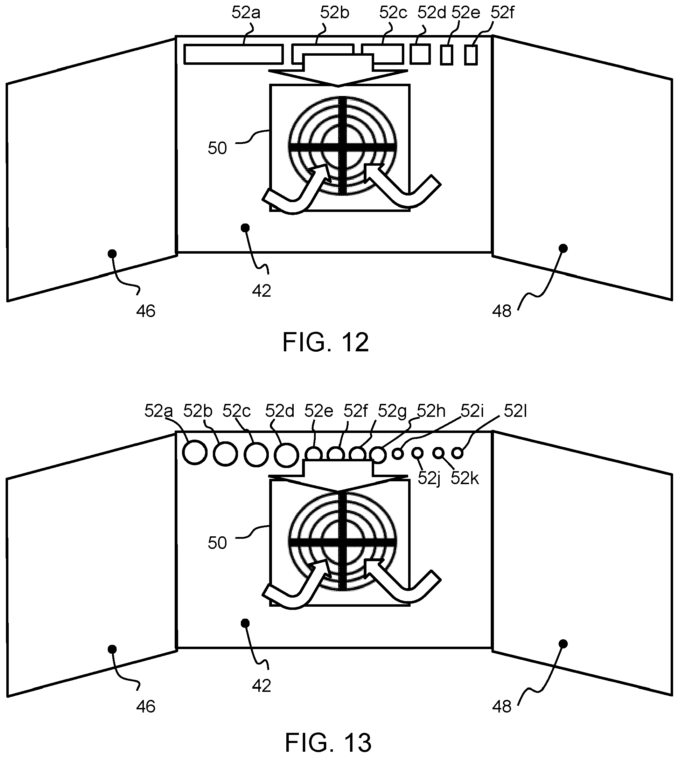

Figure 12 shows an example with only the first delivery vent, and in which it is again not a continuous slot, but is divided into a set of slots 52a to 52e. In this case, they have progressively decreasing slot width from one side of the rear wall area 42 to the other.

Figure 13 shows an example with only the first delivery vent, and in which it is divided into a set of circular openings 52a to 521. In this case, they have progressively decreasing diameter width from one side of the rear wall area 42 to the other (but in three groups of four, with each group being of the same diameter).

It will be seen from these examples that the first delivery vent does not need to extend in an uninterrupted manner across the width of the rear wall. It may be formed as a series of openings, which as a whole extend across a desired width as explained above.

The uneven first delivery vent shape may be selected having regard to the flow delivered by the fan. In particular, the fan introduces an airflow which is unevenly distributed across the lid surface. The distribution depends on rotation direction of the fan. A diffusor may be provided at the air exit of the fan (not shown) to compensate the uneven air distribution The use of irregular vent openings enable restrictions to be implemented into the flow to influence the pressure distribution and to direct the airflow in a better way. Thus, the fins and the particular design of the vent openings together create a desired flow distribution.

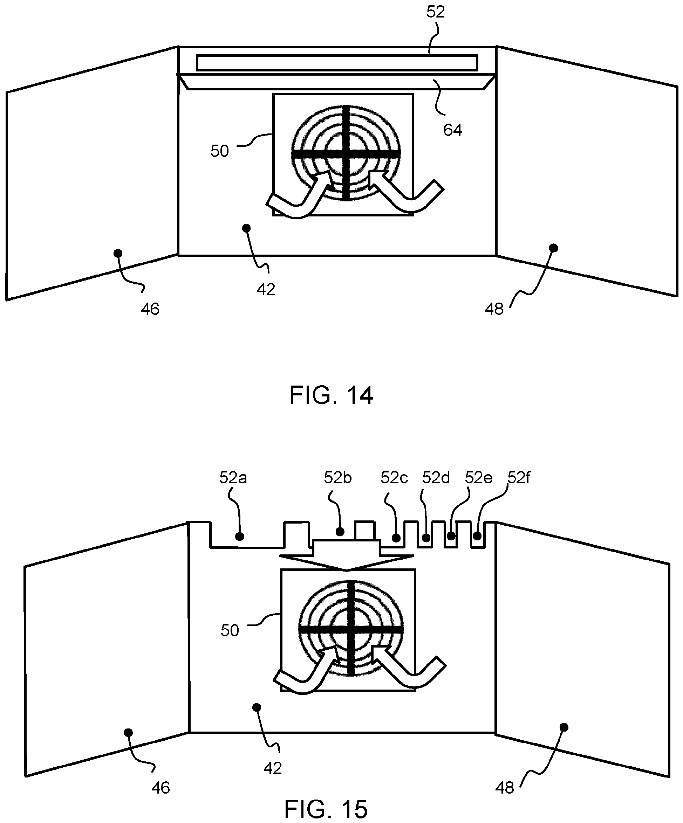

Figure 14 shows an example with only the first delivery vent, and in which it has a shelf 64.

Figure 15 shows an example with only the first delivery vent, and in which it is formed as a series of notches 52a - 52f, with open tops leading to the top of the rear wall portion 42.

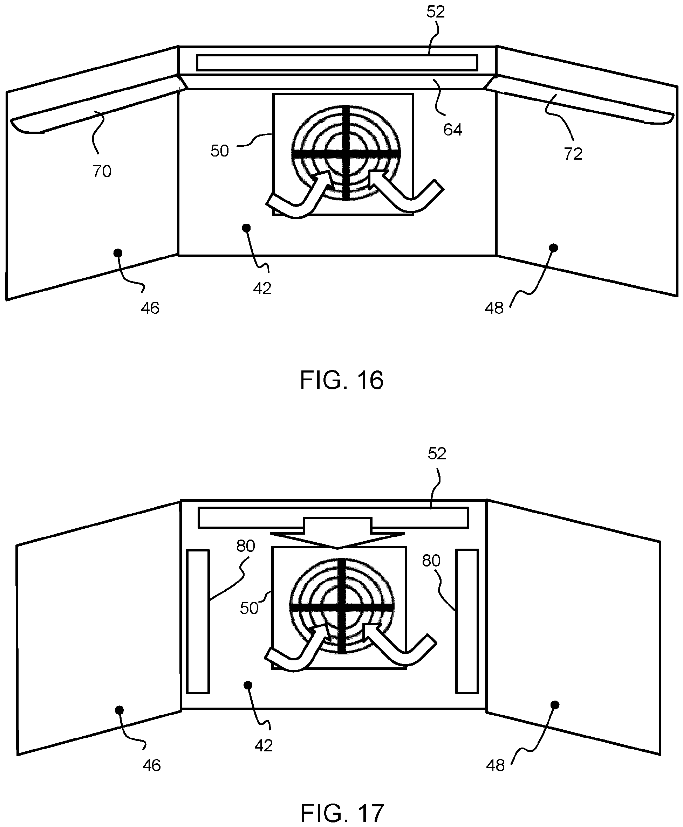

Figure 16 shows an example with only the first delivery vent, but in which the rear wall portion 42 and the side wall portions 46, 48 have the shelves 64, 70, 72. Thus, even without a vent (and without flow guiding fins) the shelf may be used to provide a flow directing function.

Figure 17 shows an example with the three vents 52, 80 in the rear wall portion 42 as in the example of Figure 7, but with no vents in the side wall portions.-

The open views above show rectangular side wall portions, and hence correspond to a horizontal top.

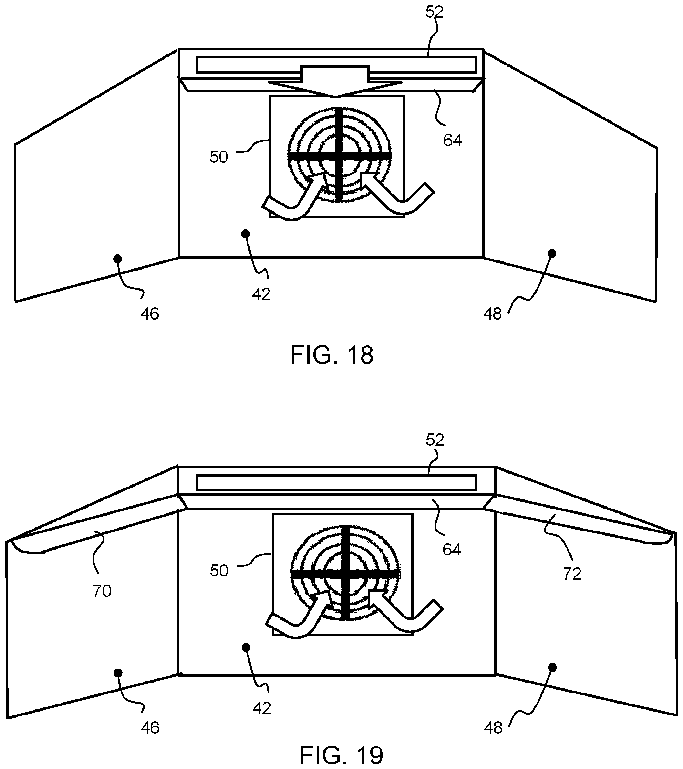

For completeness, Figures 18 to 20 show more clearly the side wall portions 46, 48 with sloping tops to correspond to the inclined lid explained with reference to Figure 8.

Figure 18 corresponds to Figure 14 but with non-rectangular side wall portions.

Figure 19 corresponds to Figure 16 but with non-rectangular side wall portions.

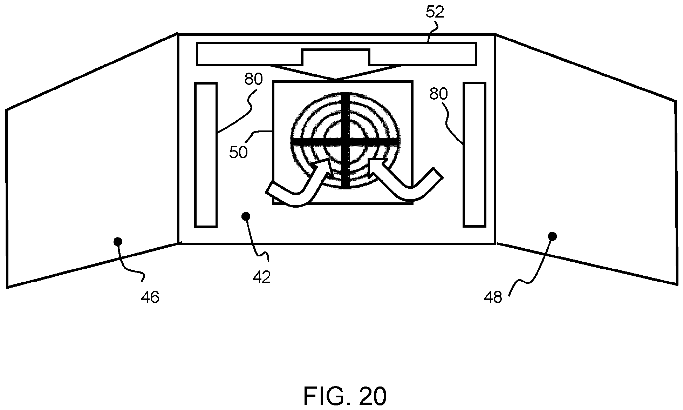

Figure 20 corresponds to Figure 17 but with non-rectangular side wall portions.

Of course, all of the designs shown in Figures 2, 6, 7 and 10 to 17 may be applied to a design with an inclined top.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

The following numbered paragraphs provide further disclosure of the present subject matter.
1. A steam cooking apparatus (10), comprising:
   a food chamber (12) comprising a base (40), a rear wall area (42), first and second opposing side wall areas (46,48) and a front wall area (44);
   a transparent lid (13);
   a heating arrangement (16, 18);
   a water reservoir (20);
   a circulation system (24, 26) comprising an extraction vent (50) in the rear wall area through which air is drawn from inside the food chamber, and a delivery vent arrangement for delivering air to the food chamber,
   wherein the delivery vent arrangement comprises:
      a first delivery vent (52) at a top region of the rear wall area (42) above the extraction vent (50) and extending across at least half of the width of the rear wall area (42) and/or at least half a width of the transparent lid.
2. The steam cooking apparatus of paragraph 1, wherein the transparent lid is inclined downwardly from the rear wall area towards the front wall area.
3. The steam cooking apparatus of paragraph 1 or 2, wherein the first delivery vent is in series with a set of flow guiding fins (60), wherein the flow guiding fins (60) are upright.
4. The steam cooking apparatus of paragraph 3, wherein the first delivery vent (52) comprises a slot extending (62) widthwise across the rear wall area, and the flow guiding fins (60) extend from top to bottom of the slot, within or in front of the slot.
5. The steam cooking apparatus of paragraphs 3 to 4, wherein the first set of flow guiding fins comprises 1 to 10 flow guiding fins.
6. The steam cooking apparatus of paragraphs 3 to 5, wherein the first delivery vent (52) comprises a lower shelf (64) on which the flow guiding fins are located.
7. The steam cooking apparatus of paragraph 6, wherein the first delivery vent (52) comprises an upper shelf (66), wherein the flow guiding fins (60) are sandwiched between the lower shelf and the upper shelf.
8. The steam cooking apparatus of paragraphs 1 to 7, further comprising:
   a second delivery vent (54) at a top region of the first side wall area; and
   a third delivery vent (56) at a top region of the second side wall area.
9. The steam cooking apparatus of paragraph, wherein the second and third delivery vents (54,56) each comprise a lower shelf (70,72).
10. The steam cooking apparatus of paragraphs 6 and 9, wherein the lower shelves (64, 70,72) of the first, second and third delivery vents form a continuous ridge.
11. The steam cooking apparatus of paragraphs 1 to 10, comprising a controller (28) adapted to control the heating arrangement to heat water from the water reservoir to create steam.
12. The steam cooking apparatus of paragraphs 1 to 11, further comprising a water dosing system (22) for delivering water to the heating arrangement.
13. The steam cooking apparatus of paragraphs 1 to 12, comprising a feed arrangement (23) for providing water from the water reservoir into contact with a heated surface of the first heater.
14. The steam cooking apparatus of paragraphs 1 to 13, wherein the transparent lid (13) is openable.
15. The steam cooking apparatus of paragraphs 1 to 14, wherein the delivery vent arrangement is adapted to:
   create a flow over the full area of an underside of the transparent lid (13) and/or
   prevent localized flow rotation within the food chamber.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a food chamber (12) comprising a base (40), a rear wall area (42), first and second opposing side wall areas (46,48) and a front wall area (44);
a lid (13);
a heating arrangement (16, 18);
a water reservoir (20);
a circulation system (24, 26) comprising an extraction vent (50) in the rear wall area through which air is drawn from inside the food chamber, and a delivery vent arrangement for delivering air to the food chamber,
wherein the delivery vent arrangement comprises:
a first delivery vent (52) at a top region of the rear wall area (42) above the extraction vent (50).

2. The steam cooking apparatus as claimed in claim 1, wherein the lid is inclined downwardly from the rear wall area towards the front wall area.

3. The steam cooking apparatus as claimed in claim 1 or 2, wherein the first delivery vent is in series with a set of flow guiding fins (60), wherein the flow guiding fins (60) are upright.

4. The steam cooking apparatus as claimed in claim 3, wherein the first delivery vent (52) comprises a slot extending (62) widthwise across the rear wall area, and the flow guiding fins (60) extend from top to bottom of the slot, within or in front of the slot.

5. The steam cooking apparatus as claimed in any one of claims 3 to 4, wherein the first set of flow guiding fins comprises 1 to 10 flow guiding fins.

6. The steam cooking apparatus as claimed in any one of claims 3 to 5, wherein the first delivery vent (52) comprises a lower shelf (64) on which the flow guiding fins are located.

7. The steam cooking apparatus as claimed in claim 6, wherein the first delivery vent (52) comprises an upper shelf (66), wherein the flow guiding fins (60) are sandwiched between the lower shelf and the upper shelf.

8. The steam cooking apparatus as claimed in any one of claims 1 to 7, further comprising:
a second delivery vent (54) at a top region of the first side wall area; and
a third delivery vent (56) at a top region of the second side wall area.

9. The steam cooking apparatus as claimed in claim 8, wherein the second and third delivery vents (54,56) each comprise a lower shelf (70,72).

10. The steam cooking apparatus as claimed in claim 6 and claim 9, wherein the lower shelves (64, 70,72) of the first, second and third delivery vents form a continuous ridge.

11. The steam cooking apparatus as claimed in any one of claims 1 to 10, comprising a controller (28) adapted to control the heating arrangement to heat water from the water reservoir to create steam.

12. The steam cooking apparatus as claimed in any one of claims 1 to 11, further comprising:
a water dosing system (22) for delivering water to the heating arrangement; and/or
a feed arrangement (23) for providing water from the water reservoir into contact with a heated surface of the heating arrangement.

13. The steam cooking apparatus as claimed in any one of claims 1 to 12, wherein the first delivery vent extends across at least half of the width of the rear wall area (42) and/or at least half a width of the lid.

14. The steam cooking apparatus as claimed in any one of claims 1 to 13, wherein the lid (13) is transparent; and/or wherein the lid is openable.

15. The steam cooking apparatus as claimed in any one of claims 1 to 14, wherein the delivery vent arrangement is adapted to:
create a flow over the full area of an underside of the lid (13) and/or
prevent localized flow rotation within the food chamber.
